(19) **Europäisches Patentamt**
**European Patent Office**
**Office européen des brevets**

(11) **EP 2 696 404 A1**

(12) **EUROPEAN PATENT APPLICATION**
published in accordance with Art. 153(4) EPC

(43) Date of publication:
**12.02.2014 Bulletin 2014/07**

(51) Int Cl.:
**H01M 4/136** (2010.01)    **H01M 4/62** (2006.01)
**H01M 10/0525** (2010.01)    **H01M 10/42** (2006.01)
**H01M 10/058** (2010.01)

(21) Application number: **12761536.7**

(22) Date of filing: **20.07.2012**

(86) International application number:
**PCT/CN2012/078983**

(87) International publication number:
**WO 2013/120339 (22.08.2013 Gazette 2013/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.02.2012 CN 201210031592**

(71) Applicant: **Huawei Technologies Co., Ltd.
Shenzhen, Guangdong 518129 (CN)**

(72) Inventor: **LIU, Junxian
Shenzhen
Guangdong 518129 (CN)**

(74) Representative: **Kreuz, Georg Maria
Huawei Technologies Duesseldorf GmbH
Dessauerstrasse 3
80992 München (DE)**

(54) **LITHIUM ION BATTERY POSITIVE ELECTRODE MATERIAL, METHOD FOR MANUFACTURE THEREOF, POSITIVE ELECTRODE AND LITHIUM ION BATTERY**

(57) The present invention, relating to the battery field, discloses a positive pole material of a lithium ion battery and method for preparing the same, a positive pole of a lithium ion battery, and a lithium ion battery, which are capable of effectively preventing precipitation of metal impurity ions on a negative pole, and improving the cycle performance and high-temperature storage performance of the lithium ion battery. The positive pole material of the lithium ion battery includes: a conductive additive; nano phosphate, where the formula of the nano phosphate is $LiMPO_4$, M being one or multiple of Co, Ni, Mn, Fe, and V; and a functional polymer material, where the functional polymer material contains a transition metal ion chelating function group. The present invention also provides a method for preparing a lithium ion battery and a communication device. The present invention is applicable to the battery field.

FIG. 1

EP 2 696 404 A1

## Description

This application claims priority to Chinese Patent Application No. 201210031592.4, filed with the Chinese Patent Office on February 13, 2012 and entitled "POSITIVE POLE MATERIAL OF LITHIUM ION BATTERY, METHOD FOR PREPARING THE SAME, POSITIVE POLE, AND LITHIUM ION BATTERY", which is incorporated herein by reference in its entirety.

## FIELD OF THE INVENTION

The present invention relates to the battery field, and in particular, to a positive pole material of a lithium ion battery, a positive pole of a lithium ion battery, and a lithium ion battery.

## BACKGROUND OF THE INVENTION

Researches into electrode materials of current lithium ion batteries focus mainly on the development of excellent positive pole materials. A phosphate positive pole material is a lithium compound, with a formula of $LiMPO_4$, where M is one or multiple elements selected from Co, Ni, Mn, Fe, and V.

Currently, $LiMPO_4$ type positive pole materials are mainly prepared by using a solid phase method. For example, in the patent with publication No. CN101630730, a process of preparing a lithium iron phosphate material is as follows: mixing a lithium compound, a ferric compound, a phosphorus compound, an element-blended compound at a molar ratio of 1:1:1 of Li:Fe:P, performing high energy ball milling for the mixture for 10 to 20 hours, drying the mixture in an air-blowing drying machine, crashing the dried mixture by using a crashing device, preheating the mixture in an atmosphere oven at a temperature of 400°C for 10 hours, mixing the mixture with conductive carbon dispersive liquid at a ratio of 100:2-30, placing the mixture into a high energy ball milling machine for milling for 20 hours, and then heat the milled mixture under the protection atmosphere at a temperature of 500-700°C for 20-30 hours. Finally, a blend lithium iron phosphate material is obtained. For another example, in the patent with publication No. CN101399343, a process of preparing a lithium iron phosphate material is as follows: ball milling a lithium source, a ferrous iron source, a phosphorus source, and a carbon source in a planet-type ball milling machine for 25 hours, drying the mixture and heating it under argon protection at a temperature of 450°C, ball milling the product after the heating for one hour, drying the milled product and heating it a second time at a temperature of 800°C. Finally, the lithium iron phosphate positive pole material is obtained.

However, during the preparation process using such methods, failure to uniformly mixing materials or failure of uniform reaction may result in that some impurities such as an unreacted ferric compound remain in the product of the positive pole material. In addition, these methods require multiple times of steps such as high energy ball milling and mixing, drying, heating and crashing, and the operation takes a long time. Therefore, metal devices, pipelines, materials and dust in the environment may introduce metal impurities such as Fe, Mn, Cr, Ni, Zn, and Cu. Introduction of such metal impurities may affect charge and discharge of batteries and affect capacities of the batteries. In addition, in charge and discharge cycle and storage of the battery, these metal impurities may be dissolved in the electrolytic solution and form metal positive ions, and these positive ions may migrate to the negative poles under the drive of electric field, and finally be precipitated on the negative poles and separator files of the batteries. This increases self-discharge of the batteries, if severe, penetrates the separator films, causing the batteries short-circuited and therefore leading to safety accidents. In addition, during the long-term cycling use of a battery, the electrolytic solution is oxidized or reacts with the moisture content to generate hydrofluoric acid (HF), and reacts with the $LiMPO_4$ positive pole material, which also enables impurity metal ions, such as Fe and Mn, in the material to be precipitated. In a high-temperature environment, this reaction process may be accelerated. Therefore, for a longer life cycle or use in high-temperature conditions of a $LiMPO_4$ battery, the quantity of the metal impurities in the $LiMPO_4$ positive pole material needs to be strictly controlled. In application fields requiring high quality positive pole, such as energy storage devices and electric automobiles, the quantity of metal impurities in lithium iron phosphate positive pole materials generally needs to be controlled within several PPM. This imposes high requirements for raw materials, devices, and manufacture environments. Therefore, the manufacture cost is high.

In the prior art, a method of cleaning the positive pole materials using deionized water or soaking the positive pole materials using acid solutions is used to reduce the metal impurities in the positive pole materials, thereby mitigating bad impacts on the batteries. For example, in the Japanese Patent No. H0-2003-17054, the lithium compound is cleaned using water. For another example, in the international publication brochure No. 2005/051840, after $LiFePO_4$ is synthesized by using hydro-thermal, $LiFePO_4$ is cleaned and purified using distilled water to remove impurities in $LiFePO_4$. For still another example, in the patent with publication No. CN101276909, the $LiFePO_4$ material is cleaned using a PH buffer solution, which effectively removes the ferric monomer and ferric oxide in the material. The PH value of the buffer solution preferably ranges from 5.3 to 8.1.

However, these methods are not ideal for removing inert metal impurities, and fail to process the metal ions precipitated during the charge and discharge process of the positive materials inside the batteries. For example, HF in the electrolytic solution reacts with the positive materials, enabling the impurity ions to be precipitated in the positive pole materials.

## SUMMARY OF THE INVENTION

Embodiments of the present invention provide a positive pole material of a lithium ion battery and method for preparing the same, a positive pole of a lithium ion battery, a lithium ion battery and method for preparing the same, and a communication device, which are capable of effectively preventing precipitation of metal impurity ions on a negative pole, and improving the cycle performance and high-temperature storage performance of the lithium ion battery.

In order to achieve the foregoing objective, the embodiments of the present invention adopt the following technical solutions.

A positive pole material of a lithium ion battery includes:

a conductive additive;
nano phosphate, where the formula of the nano phosphate is $LiMPO_4$, and M is one or multiple of Co, Ni, Mn, Fe, and V; and
a functional polymer material, where the functional polymer material contains a transition metal ion chelating function group.

A method for preparing a positive pole material of a lithium ion battery includes:

dissolving a functional polymer material containing a transition metal ion chelating function group in a polar organic solvent to obtain a functional polymer solution;
mixing the functional polymer solution, a conductive additive, and nano phosphate, sealing and milling the mixture to obtain phosphate slurry, where the formula of the nano phosphate is $LiMPO_4$, where M is one or multiple of Co, Ni, Mn, Fe, and V; and
drying the $LiMPO_4$ slurry, and removing the solvent to obtain the positive pole material of the lithium ion battery.

A positive pole of a lithium ion battery is provided, where the positive pole of the lithium ion battery is prepared by using the positive pole material of the lithium ion battery according to embodiments of the present invention.

A lithium ion battery is provided, where the lithium ion battery includes the positive pole of the lithium ion battery according to embodiments of the present invention.

A method for preparing a lithium ion battery includes:

preparing a positive pole and a negative pole of the lithium ion battery, where the positive pole of the lithium ion battery is prepared by using the positive pole material of the lithium ion battery according to embodiments of the present invention;
preparing a battery pole core by using the positive pole of the lithium ion battery and the negative pole of the lithium ion battery;
fixing the battery pole core in a battery shell;
injecting an electrolytic solution into the battery shell; and
sealing the battery shell.

A communication device includes a power supply module and a working module, where the power supply module includes the lithium ion battery according to embodiments of the present invention, the power supply module supplies electrical energy to the working module, and the working module runs under the electrical energy supplied by the power supply module.

The positive pole material of the lithium ion battery and method for preparing the same, the positive pole of the lithium ion battery, the lithium ion battery and method for preparing the same, and the communication device according to the embodiments of the present invention are capable of capturing the metal impurity ions precipitated on the surface of the positive pole material by using the chelating action of the transition metal ion chelating function group in the functional polymer material, thereby suppressing migration of the impurity ions. In this way, precipitation of the metal ions on the negative pole is prevented, and latent risks caused by self-discharge of the battery are mitigated, thereby achieving the objective of improving the cycle performance and the high-temperature storage performance of the lithium ion battery.

**BRIEF DESCRIPTION OF THE DRAWINGS**

To illustrate the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and those of ordinary skill in the art can derive other drawings from these accompanying drawings without creative efforts.

FIG. 1 is an observation diagram obtained by a scanning electron microscope of a positive pole material of a lithium ion battery according to an embodiment of the present invention;
FIG. 2 is a flow chart of a method for preparing a positive pole material of a lithium ion battery according to an embodiment of the present invention;
FIG. 3 is a flow chart of a method for preparing a lithium ion battery according to an embodiment of the present invention; and
FIG. 4 is a composition block diagram of a communication device according to an embodiment of the present invention.

**DETAILED DESCRIPTION OF THE EMBODIMENTS**

The following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by those of ordinary skill in the art based on the embodiments of the present invention without creative efforts shall fall within the protection scope of the present invention.

An embodiment of the present invention provides a positive pole material of a lithium ion battery, including:

a conductive additive;
nano phosphate, where the formula of the nano phosphate is $LiMPO_4$, where M is one or multiple of Co, Ni, Mn, Fe, and V; and
a functional polymer material, where the functional polymer material contains a transition metal ion chelating function group.

The transition metal ion chelating function group contained in the functional polymer material refers to a function group capable of chelating with a transition metal ion. Preferably, in the embodiments of the present invention, the transition metal ion chelating function group in the functional polymer material is one or multiple selected from -CO-, -COO-, -CN, and -CON. Certainly, those skilled in the art may also select other function groups capable of chelating with a transition metal ion based on common knowledge in the art, which is not limited in the embodiments of the present invention.

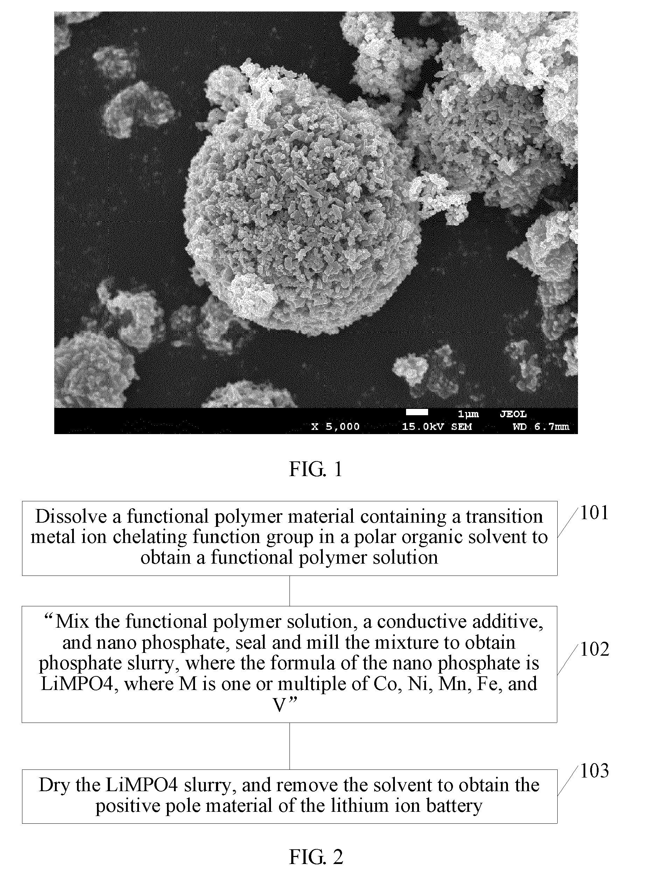

An SEM (Scanning Electron Microscope, scanning electron microscope) test is performed on the positive pole material of the lithium ion battery according to the embodiments of the present invention by using a JSM-5610LV scanning electron microscope from JEOL in Japan. The amplification ratio is 5000. The specific observation result is as shown in FIG. 1.

The positive pole material of the lithium ion battery according to the embodiments of the present invention is capable of capturing the metal impurity ions precipitated on the surface of the positive pole material by using the chelating action of the transition metal ion chelating function group in the functional polymer material, thereby suppressing migration of the impurity ions. In this way, precipitation of the metal ions on the negative pole is prevented, and latent risks caused by self-discharge of the battery are mitigated, thereby achieving the objective of improving the cycle performance and the high-temperature storage performance of the lithium ion battery.

For the positive pole material of the lithium ion battery according to the embodiments of the present invention, the conductive additive may be a conductive material such as a carbon nanotube or carbon black, or may be other conductive materials commonly known by those skilled in the art, which is not limited in the embodiments of the present invention.

The formula of the nano phosphate is $LiMPO_4$, where M is one or multiple of Co, Ni, Mn, Fe, and V. It should be noted that the formula $LiMPO_4$ is only used to define basic elements forming the nano phosphate instead of limiting the material ratio of the contained basic elements. Those skilled in the art may select the phosphate complying with the formula $LiMPO_4$, for example, lithium iron phosphate ($LiFePO_4$), and lithium iron manganese phosphate ($LiMn_{0.6}Fe_{0.4}PO_4$) based on common knowledge or common technical means in the art.

Preferably, the particle size of the positive pole material of the lithium ion battery according to the embodiments of the present invention ranges from 8-16 μm, thereby achieving good conductive performance. Certainly, the particle size may be in another proper size, which is not limited in the present invention.

Optionally, in the positive pole material of the lithium ion battery according to the embodiments of the present invention, the functional polymer material may be formed by copolymerizing a methyl methacrylate MMA monomer and at least one vinyl monomer containing the transition metal ion chelating function group. In this case, the transition metal ion chelating function group in the vinyl monomer may be one or multiple selected from -CO-, -COO-, -CN, and -CON. The number of each function group contained in the vinyl monomer may be one or multiple. The number of function groups contained in the vinyl monomer is not specifically limited according to the embodiments of the present invention.

Preferably, the composition molar ratio of the methyl methacrylate MMA monomer to the vinyl monomer in the functional polymer material is 1:1-10. This ensures that the formed functional polymer material has a sufficient number of transition metal ion chelating function groups to effectively capture transition metal impurity ions.

Specifically, in an embodiment of the present invention, the transition metal ion chelating function group is -CO-, and the vinyl monomer used for copolymerization includes N-vinyl-pyrrolidone or ketene with the formula of $CH_2=CH(CH_2)_nCOR$, where n is greater than or equal to 0, and R is alkyl.

In another embodiment of the present invention, the transition metal ion chelating function group is -COO-, and the vinyl monomer used for copolymerization includes anhydride-type vinyl monomer or ketene with the formula of $CH_2=CH(CH_2)_nCOOR$, where n is greater than or equal to 0, and R is alkyl.

In another embodiment of the present invention, the transition metal ion chelating function group is -CN-, and the vinyl monomer used for copolymerization includes acrylonitrile, methacrylonitrile, or vinylidene cyanide.

In another embodiment of the present invention, the transition metal ion chelating function group is -CON, and the vinyl monomer used for copolymerization includes acrylamide, diacetoneacrylamide, or methylenebisacrylamide.

Corresponding to the positive pole material of the lithium ion battery, an embodiment of the present invention also provides a method for preparing the positive pole material of the lithium ion battery, as shown in FIG. 2, including:

101. Dissolve a functional polymer material containing a transition metal ion chelating function group in a polar organic solvent to obtain a functional polymer solution.

Preferably, the functional polymer solution with mass percent concentration of 1 to 5% may be prepared by controlling the material ratio of the polymer material and the polar organic solvent.

102. Mix the functional polymer solution, a conductive additive, and nano phosphate, seal and mill the mixture to obtain phosphate slurry, where the formula of the nano phosphate is $LiMPO_4$, where M is one or multiple of Co, Ni, Mn, Fe, and V.

Specifically, the particle size of the selected nano phosphate ranges from 50 to 200 nm. In addition, optionally, the sealing milling mode is preferably sealing ball milling by using a ball milling machine. Certainly, other sealing milling modes may also be selected by those skilled in the art based on common knowledge or common technical means in the art.

Preferably, this step specifically includes:

dispersing the conductive additive in the polymer solution, and mixing the solution with the nano phosphate.

In the embodiments of the present invention, ultrasonic dispersion may be specifically used to disperse the conductive additive in the polymer solution.

103. Dry the $LiMPO_4$ slurry, and remove the solvent to obtain the positive pole material of the lithium ion battery.

Preferably, this step includes:

drying the $LiMPO_4$ slurry, removing the solvent, and controlling the particle size of the product to range from 8-16 μm, and obtaining the positive pole material of the lithium ion battery.

In the embodiments of the present invention, a centrifugal spray drying device may be specifically used for drying.

The method for preparing the positive pole material of the lithium ion battery according to the embodiments of the present invention is capable of capturing the metal impurity ions precipitated on the surface of the positive pole material by using the chelating action of the transition metal ion chelating function group in the functional polymer material, thereby suppressing migration of the impurity ions. In this way, precipitation of the metal ions on the negative pole is prevented, and latent risks caused by self-discharge of the battery are mitigated, thereby achieving the objective of improving the cycle performance and the high-temperature storage performance of the lithium ion battery.

Certainly, in the method for preparing the positive pole material of the lithium ion battery, those skilled in the art may prepare other functional polymer solutions with different concentrations, use nano phosphate with other particle sizes, use other proper milling modes to mill the mixture of the functional polymer solution, the conductive additive and the nano phosphate, and control the particle size of the positive pole material of the lithium ion battery to another size based on common knowledge or technical means in the art, which are not limited in the embodiments of the present invention.

Further, in an embodiment of the present invention, before step 101, the method further includes preparing the functional polymer. The preparing the functional polymer includes:

adding a methyl methacrylate MMA monomer, at least one vinyl monomer containing the transition metal ion chelating function group, a solvent, and an initiator to a reaction vessel to form a mixture, where:

it should be noted that a corresponding organic solvent or deionized water may be selected according to the dissolution property of the monomers and used as the solvent, and an oil initiator such as benzoyl peroxide BPO and azodiisobutyrodinitrile AIBN, or an aqueous initiator such as hydrogen oxide and ammonium peroxydisulfate may be selected according to the solvent and used as the initiator; and
in the embodiments of the present invention, the mass of the added solvent is specifically 5 to 10 times of the total mass of the monomers, and the mass of the initiator is specifically 1 to 5% of the total mass of the monomers; and the molar ratio of the methyl methacrylate MMA monomer to the vinyl monomer is 1:1-10;

leading nitrogen to the reaction vessel, stirring the mixture and sealing the reaction vessel, heating the reaction vessel and maintaining a constant temperature to make the mixture to react under stirring, and adding a cross-linking agent to make the mixture further react under stirring, to obtain a polymer product, where:

specifically, in the embodiments of the present invention, the heating temperature and constant temperature range from 40 to 80°C; before the cross-linking agent is added to the mixture, the reaction duration under stirring is 0.5 to 24 hours; the mass of the added cross-linking agent is 0.02 to 0.1% of the total mass of the monomers; and the reaction duration under stirring after the cross-linking agent is added is 2 to 12 hours; and
filtering the prepared polymer product and drying the product to obtain the functional polymer material.

In the embodiments of the present invention, a vacuum drying box is specifically used to dry the filtered polymer product.

During preparation of the functional polymer, the specific preparation conditions such as the specific solvent, initiator, cross-linking agent and the mass of these substances to be added, the molar ratio of the monomers participating in the reaction, the temperature, time and specific devices in the reaction may all be selected by those skilled in the art based on common knowledge or common technical means in the art, which are not limited in the embodiments of the present invention.

Accordingly, an embodiment of the present invention also provides a positive pole of a lithium ion battery, where the lithium ion positive pole is prepared by using the positive pole material of the lithium ion battery described above.

Accordingly, an embodiment of the present invention also provides a lithium ion battery, where the lithium ion battery includes the positive pole of the lithium ion battery described above.

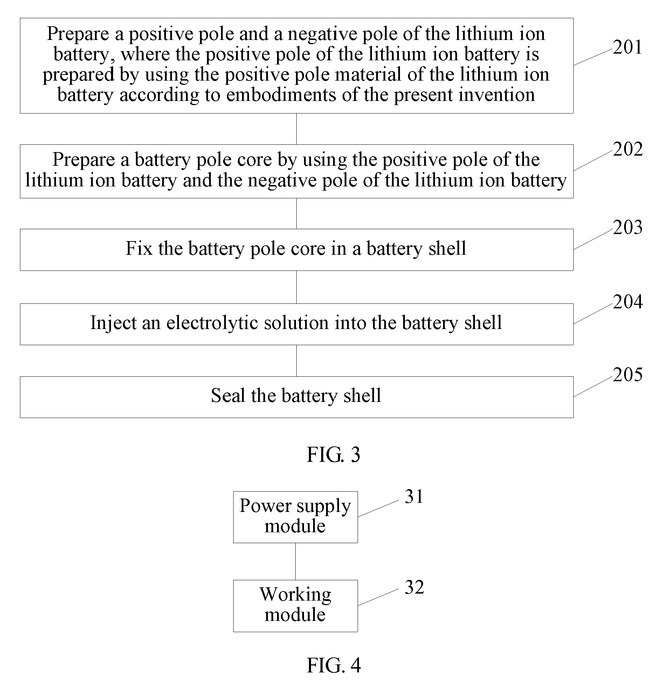

Accordingly, an embodiment of the present invention also provides a method for preparing the lithium ion battery, as shown in FIG. 3, including:

201. Prepare a positive pole and a negative pole of the lithium ion battery, where the positive pole of the lithium ion battery is prepared by using the positive pole material of the lithium ion battery according to embodiments of the present invention.

202. Prepare a battery pole core by using the positive pole of the lithium ion battery and the negative pole of the lithium ion battery.

Specifically, a separator film may be arranged in the positive pole of the battery and the negative pole of the battery, and be coiled into the battery pole core. The battery pole core may be specifically in a rectangle shape. In the embodiments of the present invention, the specific type of the separator film and the specific shape of the battery pole core used are not limited. Those skilled in the art may make selections based on common knowledge or common technical means in the art.

203. Fix the battery pole core in a battery shell.

In the embodiments of the present invention, the mode for fixing the battery pole core in the battery shell is not limited. Those skilled in the art may determine a proper fixing mode based on common knowledge or common technical means in the art, for example, fixing the battery pole core in the battery shell by soldering.

204. Inject an electrolytic solution into the battery shell.

In the embodiments of the present invention, the concentration and injection quantity of the electrolytic solution are not limited. Those skilled in the art may determine the concentration and injection quantity based on common knowledge or common technical means in the art, for example, determining the concentration to be 1 mol/L and the injection quantity to be 3.8 g/Ah.

205. Seal the battery shell.

Further, in an embodiment of the present invention, the preparing the positive pole of the lithium ion battery includes:

mixing the positive pole material of the lithium ion battery, a conductive additive, a bond, and a solvent at a specific ratio, and stirring the mixture to prepare positive pole slurry, where:

specifically, in this embodiment, a vacuum high-speed stirrer may be used to stir the formed mixture; certainly, other devices or means may also be used for stirring, which are not limited in the embodiment of the present invention;
coating the positive pole slurry on an aluminum foil; and
drying the coated aluminum foil, and obtaining the positive pole of the lithium ion battery by roll pressing and clipping.

Further, preferably the conductive additive is carbon black super-P, the bond is polyvinylidene fluoride PVDF, and the solvent is N-methylpyrrolidone NMP. Certainly, other conductive additives, bonds and solvents may also be used, which are not limited in the embodiments of the present invention. In addition, the mix ratio of the lithium ion positive pole material, the conductive additive, the bond and the solvent may be determined by those skilled in the art based on common knowledge or common technical means in the art according to the actual condition, for example, lithium ion positive pole material : conductive additive : bond : solvent = 100:5:5:110 (mass ratio), which is not limited in the embodiments of the present invention.

In addition, accordingly, an embodiment of the present invention also provides a communication device. As shown in FIG. 4, the communication device includes a power supply module 31 and a working module 32. The power supply module 31 includes a lithium ion battery according to the embodiments of the present invention. The power supply module 31 supplies electrical energy to the working module 32. The working module 32 runs under the electrical energy supplied by the power supply module 31.

The power supply module 31 includes at least one lithium ion battery, and may specifically include one lithium ion battery, or may also include a lithium ion battery set formed by lithium ion batteries connected in series or parallel, which is not limited in the embodiments of the present invention.

The working module 32 runs under the electrical energy supplied by the working module 32, for example, performing tasks such as receiving, exchanging, processing and storing related information.

The communication device may be any electronic device powered by a lithium ion battery, for example, a mobile phone or a notebook computer, which is not limited in the embodiments of the present invention.

The following specifically uses a notebook computer as an example to describe the communication device according to the embodiments of the present invention. The power supply module 32 of the notebook computer includes a lithium ion battery and other corresponding circuit elements connected to the working module 31. The working module 31 includes a processor, a hard disk, a display screen, an optical drive, and a graphic card. The power supply module 32 of the notebook computer supplies electrical energy for normal running of the working module 31 of the notebook computer, and the working module 31 of the notebook computer runs normally under the electrical energy supplied by the power supply module 32.

For a better description of the positive pole material of the lithium ion battery and method for preparing the same, the positive pole of the lithium ion battery, the lithium ion battery and method for preparing the same, and the communication device, the following gives a detailed description with referring to specific embodiments.

**Embodiment 1**

Preparation of a functional polymer material is as follows:

Add a methyl methacrylate MMA monomer and an acrylonitrile AN monomer to a reaction vessel at a molar ratio of 1:2, add a solvent twice of the molar of the monomers, add an initiator being benzoyl peroxide BPO that is 3% of the total mass of the monomers to form a mixture; uniformly stir the mixture and seal the reaction vessel, heat the reaction vessel to 65°C and maintain this temperature, after reaction for 30 minutes under stirring, add N-N-methylenebisacrylamide that is 0.05% of the total mass of the monomers by using a constant pressure funnel as a cross-linking agent, and continue stirring for 3.5 hours to obtain a polymer product; and filter the prepared polymer, and dry the polymer in a vacuum drying box to obtain the desired functional polymer, where the functional polymer is a pale yellow solid.

Preparation of a positive pole material of a lithium ion battery is as follows:

Absolutely dissolve the prepared functional polymer in N,N-dimethylformamide DMF to obtain a functional polymer solution with a mass percent concentration of 2%, add carbon nanotubes, which are 1% of the total mass of the slurry and have a diameter of 10 nm and a length-diameter ratio of 150:1, as a conductive additive, and uniformly disperse the carbon nanotubes in the functional polymer solution by using ultrasonic dispersion; add a nano lithium iron phosphate ($LiFePO_4$) positive pole material that is 50% of the total mass of the slurry and has a particle size of 100 nm, and seal and ball mill the above materials for 10 hours to obtain a uniformly dispersed lithium iron phosphate slurry; and dry the slurry by using a centrifugal spray drying device to remove the solvent, and control the particle size of the product to range from 8-16 $\mu$m to obtain the lithium iron phosphate positive pole material coated with the functional polymer material.

Preparation of a positive pole of the lithium ion battery is as follows:

Mix the positive pole material of the lithium ion battery, a conductive additive being carbon black super-P, a bond being polyvinylidene fluoride PVDF, and N-methylpyrrolidone NMP at a ratio of 100:5:5:110 (mass ratio), stir the mixture in a vacuum high-speed stirrer for 4 to 8 hours to form a uniform positive pole slurry, coat the positive pole slurry on an aluminum foil uniformly, dry the aluminum foil, and obtain a 540 x 43.5 mm positive pole piece by roll pressing and clipping.

Preparation of a lithium ion battery is as follows:

Mix graphite, sodium carboxymethyl cellulose CMC, styrene-butadiene rubber SBR, and water at a mix ratio of 100:6:7:120, stir the mixture in a vacuum high-speed stirrer to obtain a uniform negative pole slurry, coat the negative pole slurry on a copper foil uniformly, and dry the copper foil, and obtain a 500 x 44 mm negative pole piece by roll pressing and clipping; and
respectively coil the positive pole piece, the negative pole piece, and Celgard2400 polypropylene porous film into a square battery pole core, and inject the electrolytic solution into an aluminum battery shell at a quantity of 3.8 g/Ah, seal the shell and preparing it into a square lithium ion battery, where the electrolytic solution is a solution with a concentration of 1 mol/L by dissolving lithium hexafluorophosphate in a solvent mixed by vinyl carbonate, divinyl carbonate, dimethyl carbonate at a mix ratio of 1:1:1 (mass ratio).

**Embodiment 2**

Preparation of a functional polymer material is as follows:

Add a methyl methacrylate MMA monomer and a vinyl acetate VAc monomer to a reaction vessel at a molar ratio of 1:1, add a solvent twice of the molar of the monomers, add an initiator being azodiisobutyrodinitrile AIBN that is 3% of the total mass of the monomers to form a mixture; uniformly stir the mixture, lead in nitrogen for 30 minutes to remove the oxygen in the reaction system, seal the reaction vessel, heat the reaction vessel to 70°C and maintain this temperature, after reaction for 30 minutes under stirring, add N-N-methylenebisacrylamide that is 0.05% of the total mass of the monomers by using a constant pressure funnel as a cross-linking agent, and continue stirring for 3 hours to obtain a polymer product; and filter the prepared polymer, and dry the polymer in a vacuum drying box to obtain the desired functional polymer, where the functional polymer is a semi-transparent white solid.

Preparation of a positive pole material of a lithium ion battery is as follows:

Absolutely dissolve the prepared functional polymer in acetone to obtain a functional polymer solution with a mass percent concentration of 2%, add carbon nanotubes, which are 1.5% of the total mass of the slurry and have a diameter of 10 nm and a length-diameter ratio of 150:1, and uniformly disperse the carbon nanotubes in the functional polymer solution by using ultrasonic dispersion; add nano lithium iron phosphate ($LiFePO_4$) positive pole material that is 50% of the total mass of the slurry and has a particle size of 100 nm, and seal and ball mill the above materials for 10 hours to obtain a uniformly dispersed lithium iron phosphate slurry; and dry the slurry by using a centrifugal spray drying device to remove the solvent, and control the particle size of the product to range from 8-16 $\mu$m to obtain the lithium iron phosphate material coated with the functional polymer material.

Preparation of a positive pole of the lithium ion battery is as follows:

Prepare the positive pole by using the method according to Embodiment 1.

Preparation of a lithium ion battery is as follows:

Prepare the lithium ion battery by using the method according to Embodiment 1.

**Embodiment 3**

The positive pole material of the lithium ion battery, the positive pole of the lithium ion battery, and the lithium ion battery are prepared by using the method described in Embodiment 1. The difference is that, during preparation of the functional polymer material, an acrylamide AM monomer is added, and the molar ratio of the added three monomers is MMA:AN:AM = 4:4:2. Finally, the lithium iron phosphate positive pole material coated with the functional polymer material, the positive pole of the lithium ion battery, and the lithium ion battery are prepared.

**Embodiment 4**

The positive pole material of the lithium ion battery, the positive pole of the lithium ion battery, and the lithium ion battery are prepared by using the method described in Embodiment 1. The difference is that, during preparation of the lithium iron phosphate positive pole material, nano carbon black having a particle size of 20 to 50 nm is used to replace the carbon nanotubes as the conductive additive, and the mass of the added carbon black is 2% of the total mass of the slurry. Finally, the lithium iron phosphate positive pole material coated with the functional polymer material, the positive pole of the lithium ion battery, and the lithium ion battery are prepared.

**Embodiment 5**

The positive pole material of the lithium ion battery, the positive pole of the lithium ion battery, and the lithium ion battery are prepared by using the method described in Embodiment 1. The difference is that, during preparation of the positive pole material of the lithium ion battery, a nano lithium iron manganese phosphate ($LiMn_{0.6}Fe_{0.4}PO_4$) positive pole material having a particle size ranging from 80 to 200 nm is used to replace the nano lithium iron phosphate ($LiFePO_4$) positive pole material to form a uniformly dispersed lithium iron manganese phosphate slurry. Finally, the lithium iron manganese phosphate positive pole material coated with the functional polymer material, the positive pole of the lithium ion battery, and the lithium ion battery are prepared.

Comparison example 1

Preparation of a positive pole of the lithium ion battery is as follows:

Prepare the positive pole by using the method for preparing the positive pole according to Embodiment 1, where the difference is that the positive pole material of the lithium ion battery directly uses the nano lithium iron phosphate positive pole material having a particle size of 100 nm according to Embodiments 1 to 4.

Preparation of a lithium ion battery is as follows:

Prepare the lithium ion battery by using the method for preparing the lithium ion battery according to Embodiment 1.

Comparison example 2

Preparation of a positive pole of the lithium ion battery is as follows:

Prepare the positive pole by using the method for preparing the positive pole according to Embodiment 1, where the difference is that the positive pole material of the lithium ion battery directly uses the nano lithium iron manganese phosphate ($LiMn_{0.6}Fe_{0.4}PO_4$) having a particle size ranging from about 80 to 200 nm according to Embodiment 5.

Preparation of a lithium ion battery is as follows:

Prepare the lithium ion battery by using the method for preparing the lithium ion battery according to Embodiment 5.
The following describes the performance test based on the above embodiments and comparison examples.

(1) Tests of room-temperature and high-temperature performance

Room-temperature and high-temperature cycle performance tests are performed for the batteries prepared according to Embodiments 1 to 5 and comparison examples 1 to 2. The test method is as follows:

Place the batteries on a charge and discharge test cabinet, and firstly constant-current and constant-voltage charge the batteries using a current of 1C to an upper threshold voltage of 3.8 V;

suspend the charge for 10 minutes, discharge the batteries from 3.8 V to 2.5 V using the current of 1C, and record initial discharge capacities of the batteries; and

repeat the above charge and discharge steps 500 times, record discharge capacities after 500 cycles, and calculate capacity maintaining rates after 500 cycles by using formula (I).

$$\text{Formula (I): capacity maintaining rate} = (\text{discharge capacity after 500 cycles/initial}$$
$$\text{discharge capacity}) \times 100\%$$

The performance tests are respectively performed under a room temperature of 25°C and a high temperature of 60°C. The test results are listed in Table 1.

**Table 1**

| Lithium ion battery | 25°C Capacity Maintaining Rate After 500 Cycles | 60°C Capacity Maintaining Rate After 500 Cycles |
|---|---|---|
| Embodiment 1 | 97.95% | 92.10% |
| Embodiment 2 | 97.41% | 91.03% |
| Embodiment 3 | 97.20% | 91.42% |
| Embodiment 4 | 96.43% | 90.50% |
| Embodiment 5 | 86.25% | 80.89% |
| Comparison example 1 | 95.90% | 88.33% |
| Comparison example 2 | 80.10% | 70.75% |

The test results show that: Compared with the lithium ion battery prepared by using the lithium iron phosphate positive pole material that is not coated with the functional polymer material according to comparison example 1, the lithium ion batteries prepared by using the lithium iron phosphate positive pole material coated with the functional polymer material according to Embodiments 1, 2, 3, and 4 have a better cycle performance under either a high temperature or a room temperature. Compared with the lithium ion battery prepared by using the lithium iron manganese phosphate positive pole material that is not coated with the functional polymer material according to comparison example 2, the lithium ion battery prepared by using the lithium iron manganese phosphate positive pole material coated with the functional polymer material according to Embodiment 5 has a better cycle performance under either a high temperature or a room temperature.

(2) Test of high-temperature storage performance

A high-temperature storage performance test is performed for the batteries prepared according to Embodiments 1 to 5 and comparison examples 1 to 2. The test method is as follows:

Place the batteries on a charge and discharge test cabinet, and firstly constant-current and constant-voltage charge the batteries using a current of 1C to an upper threshold voltage of 3.8 V;

suspend the charge for 10 minutes, discharge the batteries from 3.8 V to 2.5 V using the current of 1C, and record discharge capacities as initial discharge capacities of the batteries;

placing the batteries in a high-temperature drying oven at 60°C for 7 days, discharge the batteries from 3.8 V to 2.5 V using the current of 1C, and record discharge capacities as storage capacities of the batteries; and

repeat the above charge and discharge process three times, and record the last discharge capacities, that is, restoration capacities; and calculate capacity maintaining capabilities and capacity restoration capabilities by using formulas (II) and (III), and list the results in Table 2.

Formula (II): capacity maintaining capability = storage capacity/initial capacity

Formula (III): capacity restoration capability = restoration capacity/initial capacity

Table 2

| Lithium ion battery | Initial Capacity (mAh) | Storage Capacity (mAh) | Restoration Capacity (mAh) | Capacity Maintaining Capability for High-Temperature Storage | Capacity Restoration Capability for High-Temperature Storage |
|---|---|---|---|---|---|
| Embodiment 1 | 743 | 703 | 715 | 94.62% | 96.23% |
| Embodiment 2 | 751 | 700 | 711 | 93.21% | 94.67% |
| Embodiment 3 | 747 | 696 | 712 | 93.17% | 95.31% |
| Embodiment 4 | 744 | 682 | 688 | 91.67% | 92.47% |
| Embodiment 5 | 715 | 643 | 657 | 89.93% | 91.89% |
| Comparison example 1 | 746 | 665 | 681 | 89.14% | 91.29% |
| Comparison example 2 | 712 | 610 | 632 | 85.67% | 88.76% |

The test results show that: Compared with the lithium ion battery prepared by using the lithium iron phosphate positive pole material that is not coated with the functional polymer material according to comparison example 1, the lithium ion batteries prepared by using the lithium iron phosphate positive pole material coated with the functional polymer material according to Embodiments 1, 2, 3, and 4 have a better high-temperature storage performance. Compared with the lithium ion battery prepared by using the lithium iron manganese phosphate positive pole material that is not coated with the functional polymer material according to comparison example 2, the lithium ion battery prepared by using the lithium iron manganese phosphate positive pole material coated with the functional polymer material according to Embodiment 5 has a better high-temperature storage performance.

According to the performance test based on the above embodiments and comparison examples, the positive pole material of the lithium ion battery according to the embodiments of the present invention captures metal impurity ions precipitated on the surface of the positive pole material by using the chelating action of the transition metal ion chelating function group contained therein. In this way, precipitation of the metal ions on the negative pole is prevented, thereby achieving the objective of improving the cycle performance and the high-temperature storage performance of the lithium ion battery.

The foregoing descriptions are merely exemplary embodiments of the present invention, but not intended to limit the present invention. Any variation or replacement made by those skilled in the art without departing from the idea of the present invention shall fall within the protection scope of the present invention. Therefore, the protection scope of the present invention shall be subject to the protection scope of the claims.

**Claims**

1. A positive pole material of a lithium ion battery, comprising:

    a conductive additive;
    nano phosphate, wherein the formula of the nano phosphate is $LiMPO_4$, and M is one or multiple of Co, Ni, Mn, Fe, and V; and
    a functional polymer material, wherein the functional polymer material contains a transition metal ion chelating function group.

2. The positive pole material of the lithium ion battery according to claim 1, wherein the transition metal ion chelating function group in the functional polymer material is selected from one or multiple of -CO-, -COO-, -CN, and -CON.

3. The positive pole material of the lithium ion battery according to claim 1 or 2, wherein the particle size of the positive pole material of the lithium ion battery ranges from 8-16 $\mu$m

4. The positive pole material of the lithium ion battery according to claim 1 or 2, wherein:

   the functional polymer material is formed by copolymerizing a methyl methacrylate MMA monomer and at least one vinyl monomer containing the transition metal ion chelating function group.

5. The positive pole material of the lithium ion battery according to claim 4, wherein:

   the transition metal ion chelating function group is -CO-, and the vinyl monomer comprises N-vinyl-pyrrolidone or ketene with the formula of $CH_2=CH(CH_2)_nCOR$, wherein n is greater than or equal to 0, and R is alkyl;
   or
   the transition metal ion chelating function group is -COO-, and the vinyl monomer comprises anhydride-type vinyl monomer or ketene with the formula of $CH_2=CH(CH_2)_nCOOR$, wherein n is greater than or equal to 0, and R is alkyl;
   or
   the transition metal ion chelating function group is -CN, and the vinyl monomer comprises acrylonitrile, methacrylonitrile, or vinylidene cyanide;
   or
   the transition metal ion chelating function group is -CON, and the vinyl monomer comprises acrylamide, diacetoneacrylamide, or methylenebisacrylamide.

6. The positive pole material of the lithium ion battery according to claim 4, wherein the composition molar ratio of the methyl methacrylate MMA monomer to the vinyl monomer is 1:1-10.

7. A method for preparing the positive pole material of the lithium ion battery according to claims 1 to 6, comprising:

   dissolving a functional polymer material containing a transition metal ion chelating function group in a polar organic solvent to obtain a functional polymer solution;
   mixing the functional polymer solution, a conductive additive, and nano phosphate, sealing and milling the mixture to obtain phosphate slurry, wherein the formula of the nano phosphate is $LiMPO_4$, wherein M is one or multiple of Co, Ni, Mn, Fe, and V; and
   drying the $LiMPO_4$ slurry, and removing the solvent to obtain the positive pole material of the lithium ion battery.

8. The method for preparing the positive pole material of the lithium ion battery according to claim 7, wherein:

   the mass percent concentration of the functional polymer solution ranges from 1-5%.

9. The method for preparing the positive pole material of the lithium ion battery according to claim 7, wherein the particle size of the nano phosphate ranges from 50 to 200 nm.

10. The method for preparing the positive pole material of the lithium ion battery according to claim 7, wherein the mixing the functional polymer solution, a conductive additive, and nano phosphate comprises:

    dispersing the conductive additive in the functional polymer solution, and mixing the solution with the nano phosphate.

11. The method for preparing the positive pole material of the lithium ion battery according to claim 7, wherein the sealing milling comprises sealing ball milling.

12. The method for preparing the positive pole material of the lithium ion battery according to claim 7, wherein the drying the $LiMPO_4$ slurry, and removing the solvent to obtain the positive pole material of the lithium ion battery comprises:

    drying the $LiMPO_4$ slurry, removing the solvent, and controlling the particle size of the product to range from 8-16 $\mu$m, and obtaining the positive pole material of the lithium ion battery.

**13.** The method for preparing the positive pole material of the lithium ion battery according to any one of claims 7 to 12, wherein before the obtaining the functional polymer solution, the method further comprises: preparing the functional polymer; and the preparing the functional polymer comprises:

adding a methyl methacrylate MMA monomer, at least one vinyl monomer containing the transition metal ion chelating function group, a solvent, and an initiator to a reaction vessel to form a mixture;

leading nitrogen to the reaction vessel, stirring the mixture and sealing the reaction vessel, heating the reaction vessel and maintaining a constant temperature to make the mixture react under stirring, and adding a cross-linking agent to make the mixture further react under stirring, to obtain a polymer product; and

filtering the prepared polymer product and drying the product to obtain the functional polymer material.

**14.** The method for preparing the positive pole material of the lithium ion battery according to claim 13, wherein the molar ratio of the methyl methacrylate MMA monomer to the vinyl monomer is 1:1-10.

**15.** A positive pole of a lithium ion battery, wherein the positive pole of the lithium ion battery is prepared by using the positive pole material of the lithium ion battery according to any one of claims 1 to 6.

**16.** A lithium ion battery, wherein the lithium ion battery comprises the positive pole of the lithium ion battery according to claim 15.

**17.** A method for preparing a lithium ion battery, comprising:

preparing a positive pole and a negative pole of the lithium ion battery, wherein the positive pole of the lithium ion battery is prepared by using the positive pole material of the lithium ion battery according to any one of claims 1 to 6;

preparing a battery pole core by using the positive pole of the lithium ion battery and the negative pole of the lithium ion battery;

fixing the battery pole core in a battery shell;

injecting an electrolytic solution into the battery shell; and

sealing the battery shell.

**18.** The method for preparing the lithium ion battery according to claim 17, wherein the preparing a positive pole of the lithium ion battery comprises:

mixing the positive pole material of the lithium ion battery, a conductive additive, a bond, and a solvent at a specific ratio, and stirring the mixture to prepare positive pole slurry;

coating the positive pole slurry on an aluminum foil; and

drying the coated aluminum foil, and obtaining the positive pole of the lithium ion battery by roll pressing and clipping.

**19.** The method for preparing the lithium ion battery according to claim 18, wherein the conductive additive is a carbon black, the bond is polyvinylidene fluoride, and the solvent is N-methylpyrro lidone.

**20.** A communication device, comprising:

a power supply module and a working module, wherein: the power supply module comprises the lithium ion battery according to claim 16; and

the power supply module supplies electrical energy to the working module, and the working module runs under the electrical energy supplied by the power supply module.

FIG. 1

Dissolve a functional polymer material containing a transition metal ion chelating function group in a polar organic solvent to obtain a functional polymer solution — 101

"Mix the functional polymer solution, a conductive additive, and nano phosphate, seal and mill the mixture to obtain phosphate slurry, where the formula of the nano phosphate is LiMPO4, where M is one or multiple of Co, Ni, Mn, Fe, and V" — 102

Dry the LiMPO4 slurry, and remove the solvent to obtain the positive pole material of the lithium ion battery — 103

FIG. 2

Prepare a positive pole and a negative pole of the lithium ion battery, where the positive pole of the lithium ion battery is prepared by using the positive pole material of the lithium ion battery according to embodiments of the present invention ⟋201

Prepare a battery pole core by using the positive pole of the lithium ion battery and the negative pole of the lithium ion battery ⟋202

Fix the battery pole core in a battery shell ⟋203

Inject an electrolytic solution into the battery shell ⟋204

Seal the battery shell ⟋205

FIG. 3

Power supply module ⟋31

Working module ⟋32

FIG. 4

**EP 2 696 404 A1**

# INTERNATIONAL SEARCH REPORT

| International application No. |
|---|
| **PCT/CN2012/078983** |

**A. CLASSIFICATION OF SUBJECT MATTER**

See the extra sheet
According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

WPI; EPODOC; CPRS; CNKI: phosphate, lithium iron phosphate, chelating agent, chelat+, ligand, affinity

**C. DOCUMENTS CONSIDERED TO BE RELEVANT**

| Category* | Citation of document, with indication, where appropriate, of the relevant passages | Relevant to claim No. |
|---|---|---|
| X | CN 102163740 A (SANYO ELECTRIC CO) 24 August 2011 (24.08.2011) description, [0032]-[0033], [0055] and [0090]-[0102] | 1-6, 15-17, 20 |
| A | the whole document | 7-14, 18-19 |
| X | CN 1866605 A (SAMSUNG SDI CO LTD) 22 November 2006 (22.11.2006) description, page 11 to page 10 line 3 | 1-6, 15-17, 20 |
| A | the whole document | 7-14, 18-19 |
| X | JP 2000195548 A (SHIN KOBE ELECTRIC MACHINERY) 14 July 2000 (14.07.2000) | 1-6, 15-17, 20 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 September 2012 (11.09.2012) | **01 November 2012 (01.11.2012)** |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Hua<br><br>Telephone No. (86-10) **62411623** |
|---|---|

Form PCT/ISA /210 (second sheet) (July 2009)

**INTERNATIONAL SEARCH REPORT**

| International application No. |
|---|
| **PCT/CN2012/078983** |

C (Continuation). DOCUMENTS CONSIDERED TO BE RELEVANT

| Category* | Citation of document, with indication, where appropriate, of the relevant passages | Relevant to claim No. |
|---|---|---|
| A | description, paragraphs [0007]-[0017] the whole document | 7-14, 18-19 |
| X | TW 200723572 A (LG CHEM LTD) 16 June 2007 (16.06.2007) claims 1-5 | 1-6, 15-17, 20 |
| A | the whole document | 7-14, 18-19 |
| PX | CN 102569723 A (HUAWEI TECHNOLOGIES CO LTD) 11 July 2012 (11.07.2012) claims 1-20 | 1-20 |

Form PCT/ISA /210 (continuation of second sheet ) (July 2009)

## INTERNATIONAL SEARCH REPORT
### Information on patent family members

| | International application No. |
| --- | --- |
| | **PCT/CN2012/078983** |

| Patent Documents referred in the Report | Publication Date | Patent Family | Publication Date |
| --- | --- | --- | --- |
| CN 102163740 A | 24.08.2011 | US 2011200877 A1 | 18.08.2011 |
| | | KR 20110095188 A | 24.08.2011 |
| | | JP 2011192634 A | 29.09.2011 |
| CN 1866605 A | 22.11.2006 | EP 1696501 A1 | 30.08.2006 |
| | | JP 2006245001 A | 14.09.2006 |
| | | KR 20060095221 A | 31.08.2006 |
| | | US 2006194118 A1 | 31.08.2006 |
| | | EP 1696501 B1 | 05.12.2007 |
| | | DE 602006000279 E | 17.01.2008 |
| | | DE 602006000279 T2 | 27.11.2008 |
| | | JP 4535390 B2 | 01.09.2010 |
| | | CN 1866605 B | 06.04.2011 |
| JP 2000195548 A | 14.07.2000 | None | |
| TW 200723572 A | 16.06.2007 | WO 2007064170 A1 | 07.06.2007 |
| | | KR 20070057405 A | 07.06.2007 |
| | | US 2008280211 A1 | 13.11.2008 |
| | | CN 101322277 A | 10.12.2008 |
| | | JP 2009517836 A | 30.04.2009 |
| | | CA 2632868 A1 | 07.06.2007 |
| | | US 2010159321 A1 | 24.06.2010 |
| | | US 7745056 B2 | 29.06.2010 |
| | | CN 101322277 B | 16.02.2011 |
| | | CA 2632868 C | 20.09.2011 |
| CN102569723A | 11.07.2012 | None | |

Form PCT/ISA /210 (patent family annex) (July 2009)

# INTERNATIONAL SEARCH REPORT

International application No.

**PCT/CN2012/078983**

CLASSIFICATION OF SUBJECT MATTER:

H01M 4/136 (2010.01) i

H01M 4/62 (2006.01) i

H01M 10/0525 (2010.01) i

H01M 10/42 (2006.01) i

H01M 10/058 (2010.01) i

Form PCT/ISA /210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210031592
- CN 101630730
- CN 101399343
- JP H0200317054 B
- JP 2005051840 A
- CN 101276909